Europäisches Patentamt

European Patent Office

Office européen des brevets

(11) Veröffentlichungsnummer : **0 071 735**
**B1**

(12) # EUROPÄISCHE PATENTSCHRIFT

(45) Veröffentlichungstag der Patentschrift :
**12.02.86**

(21) Anmeldenummer : **82105630.6**

(22) Anmeldetag : **25.06.82**

(51) Int. Cl.⁴ : **F 17 C  5/06**, F 17 C 13/04,
F 16 K 15/20

(54) **Druckgasbefülleinrichtung zum Befüllen von Luftkissen.**

(30) Priorität : **01.08.81 DE 8122635 U**

(43) Veröffentlichungstag der Anmeldung :
**16.02.83 Patentblatt 83/07**

(45) Bekanntmachung des Hinweises auf die Patenterteilung : **12.02.86 Patentblatt 86/07**

(84) Benannte Vertragsstaaten :
**AT BE CH DE FR IT LI NL**

(56) Entgegenhaltungen :
**DE-A- 2 231 880**
**DE-A- 2 947 218**
**DE-C-  853 231**

(73) Patentinhaber : **J. Lorch Ges. & Co. GmbH
Bahnhofstrasse 22
D-7035 Waldenbuch (DE)**

(72) Erfinder : **Leger, Erhard
Rudolf-Diesel-Strasse 5
D-7405 Dettenhausen (DE)**

(74) Vertreter : **Dreiss, Uwe, Dr. jur. Dipl.-Ing. M.Sc. et al
Patentanwälte Dreiss, Hosenthien & Fuhlendorf
Gerokstrasse 6
D-7000 Stuttgart 1 (DE)**

## Beschreibung

Die Erfindung betrifft eine Druckgasbefülleinrichtung zum Befüllen von Luftkissen, insbesondere zum schonenden Transport von Gütern, mit einem mindestens einen, vorzugsweise aber mehrere in einem Ventilgehäuse angeordneten Ventileinsätze aufweisenden Füllventil, das einen Gewindeanschluß zum Anschluß einer Druckluftquelle aufweist, bei der ein auf den Gewindeanschluß aufgeschraubter Adapteranschluß mit einem genormten Reifenfüllanschluß mit einem Zusatzventileinsatz vorgesehen ist mit einer Anlagefläche, durch die die Ventilstößel des bzw. der Ventileinsätze bei aufgeschraubtem Adapteranschluß niedergedrückt gehalten und dadurch der Ventileinsatz bzw. die Ventileinsätze offengehalten sind. Eine solche Einrichtung ist aus der DE-A-2 231 880 bekannt.

Bei einer ähnlichen aus der DE-PS 853 231 bekannten Druckgasbefülleinrichtung ist bei aufgeschraubtem Adapteranschluß der Zusatzventileinsatz geöffnet und es wird das Ventil durch einen zusätzlichen federbelasteten Stößel zur Leichtergängigmachung Druck entlastet. Damit besteht bei aufgesetztem Adapterzusatz eine erhöhte Leckgefahr der Druckgasbefülleinrichtung.

In Vermeidung der geschilderten Nachteile liegt der vorliegenden Erfindung die Aufgabe zugrunde, die eingangs beschriebene Druckgasbefülleinrichtung so zu verbessern, daß, wenn keine Befüllung vorgesehen ist, eine besonders große Sicherheit gegen einen unerwünschten Gasaustritt aus der Druckgasbefülleinrichtung erreichbar ist.

Zur Lösung dieser Aufgabe sieht die Erfindung vor, daß der Adapteranschluß über ein Gewinde zwischen einer Ruhestellung und einer Füllstellung verstellbar ist, wobei in der Ruhestellung der Ventileinsatz bzw. die Ventileinsätze durch Freigabe des bzw. der Ventilstößel geschlossen und bei der Füllstellung der bzw. die Ventileinsätze durch den bzw. die niedergedrückten Ventilstößel geöffnet sind. Hierdurch ist in der Ruhestellung eine doppelte Dichtungsabsicherung gegeben, einmal durch den bzw. die Ventileinsätze und zum anderen zusätzlich durch den nachgeschalteten Zusatzventileinsatz.

Konstruktiv besonders einfach kann der Adapteranschluß eine ein Doppelgewinde tragende Büchse aufweisen, deren eines Gewinde auf den Gewindeanschluß aufgeschraubt ist und über deren anderes Gewinde ein hutförmiger, die Anlagefläche, den Reifenfüllanschluß mit dem Zusatzventileinsatz aufweisender, etwa rotationssymmetrisch ausgebildeter Teil gegenüber dem Ventilgehäuse axial verstellbar ist. Um den Adapteranschluß auch bei angeschlossener Füllleitung einfach zwischen seiner Ruhestellung und seiner Füllstellung verstellen zu können, kann besonders vorteilhaft der hutförmige Teil mit einer etwa rotationssymmetrischen Gewindebüchse drehbar gekoppelt sein, wobei dann diese Gewindebüchse in der das Doppelgewinde tragenden Büchse schraubbar ist. Damit wird Reifenfüllanschluß beim Verstellen des Adapteranschlusses zwischen der Ruhestellung und der Füllstellung nicht verdreht, so daß ein zeitsparendes Befüllen möglich ist.

Zur weitgehenden Herabsetzung der Reibung beim Verstellen kann die Gewindebüchse auf einem zylindrischen Halteil des hutförmigen Teils drehbar, aber in axialer Richtung gesichert gehalten sein. Dazu kann zu Erzielung einer kurzen Baulänge die Gewindebüchse einen Aufnahmeraum für die bündige Aufnahme des Reifenfüllanschlusses aufweisen, der so gegen Beschädigungen geschützt wird und es kann weiter auf der gegenüberliegenden Seite durch einen Boden getrennt ein Aufnahmeraum für den mittleren Teil des hutförmigen Teils vorgesehen sein.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1 einen Querschnitt durch ein erstes Ausführungsbeispiel,

Figuren 2 und 3 Querschnitte einer weiteren Ausführungsform, einmal in Ruhestellung und einmal in Füllstellung des Adapterteils.

Für beide dargestellten Ausführungsformen werden für entsprechende Teile die gleichen Bezugszeichen verwendet.

In einem nicht dargestellten Luftkissen, das bei der Güterbeförderung, beispielsweise bei der Bundesbahn zwischen empfindliche Transportgüter gesteckt wird, um beim Transport ein Verrutschen und eine Beschädigung zu verhindern, ist ein mehrere Ventileinsätze 1 aufweisendes Füllventil 2 vorgesehen, das einen Gewindeanschluß 3 für einen nicht näher dargestellten Befüllanschluß trägt. Ein solches Füllventil ist in der DE-OS 29 47 218 beschrieben und braucht daher nicht näher erläutert werden.

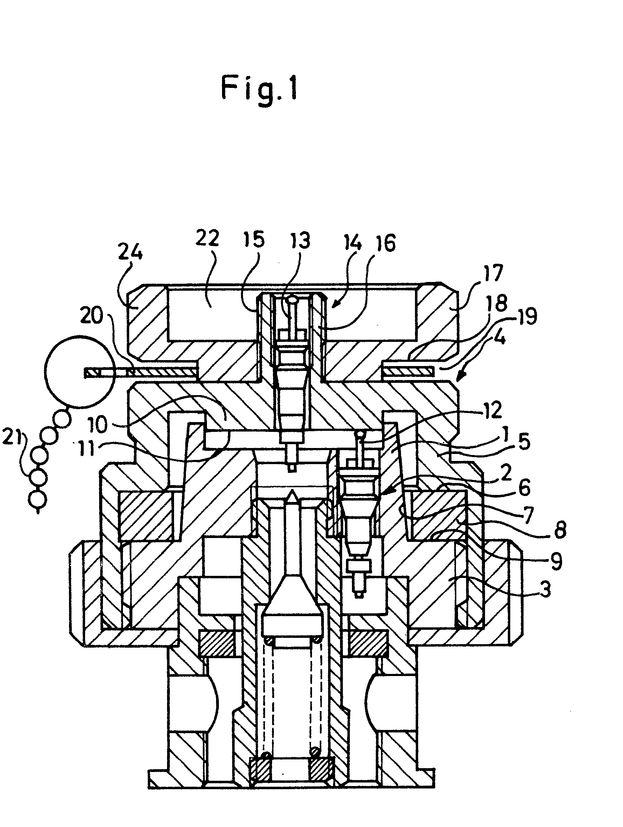

Beim in Fig. 1 dargestellten Ausführungsbeispiel ist auf dem Gewindeanschluß 3 ein Adapteranschluß 4 aufgeschraubt, der hauptsächlich aus einem hutförmigen Teil 5 besteht, dessen unterer Rand mit dem Gewindeanschluß 3 verschraubt ist. In einer Durchmesserabstufung 6 ist ein mit einem Dichtkegel 7 des Füllventils 2 zusammenwirkender Dichtungsring 8 angeordnet, der auch noch an einer Dichtfläche 9 des Gewindeanschlusses 3 dicht anliegt.

Der hutförmige Teil weist auf seiner oberen Innenseite einen Vorsprung 10 auf, der eine ebene Anlagefläche 11 aufweist, die mit den Ventilstößeln 12 der Ventileinsätze 1 zusammenwirken. Bei aufgeschraubtem, hutförmigen Teil 5 sind die Ventilstößel 12 aller Ventileinsätze 1 des Füllventils 2 offen, so daß durch einen Zusatzventileinsatz 13 im Teil 5 über einen Reifenfüllanschluß 14 Druckluft in das Luftkissen abfüllbar ist. Der Reifenfüllanschluß 14 entspricht in seinen Abmessungen und der Konstruktion dem Ventil eines Pkw- oder Lkw-Reifens, so daß die üblichen Reifenfüllgeräte zur Befüllung des Luftkissens verwendet werden können.

Auf dem Reifenfüllanschluß 14 ist auf dessen zylindrischem ein Gewinde 15 tragendem Teil 16 ein weiterer rotationssymmetrischer Teil 17 aufgeschraubt. Dieser Teil 17 ist mit einem Absatz 18 versehen, so daß zusammen mit dem Teil 5 eine Aufnahmerille 19 für einen Ring 20 einer Haltekette 21 gebildet ist. Die Haltekette 21 selbst kann mit dem Füllventil 2 gekoppelt sein, so daß der Adapteranschluß 4 unverlierbar am Füllventil 2 angekettet ist. Der Teil 17 weist auf seiner oberen Seite noch eine Ausnehmung 22 auf, so daß durch den so gebildeten umlaufenden Rand 24 der Reifenfüllanschluß 14 vertieft geschützt gegen Beschädigungen umschlossen ist. Selbstverständlich kann zum Schutz des Reifenfüllanschlusses 14 auf diesen noch eine handelsübliche Ventilkappe aufgeschraubt werden, um ein Eindringen von Schmutz zu verhindern.

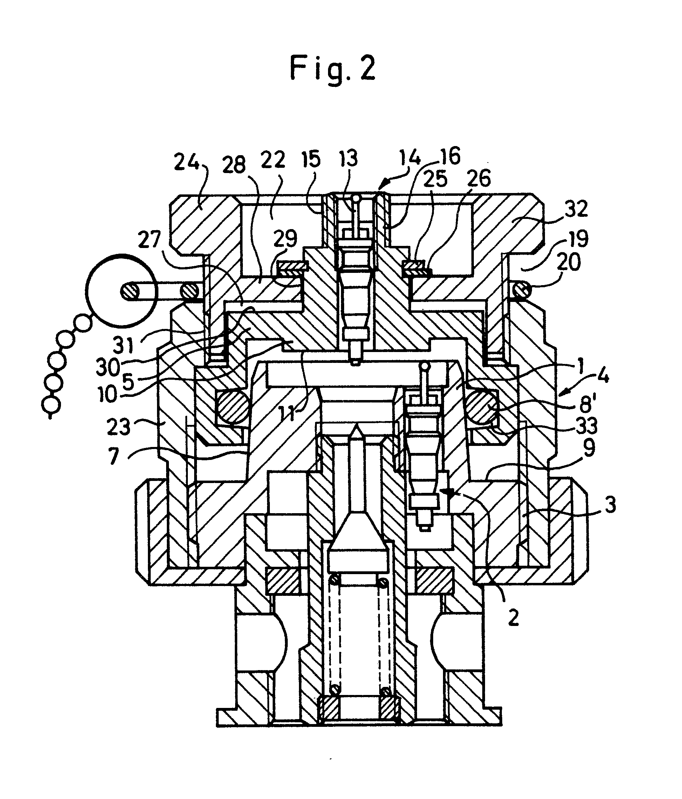

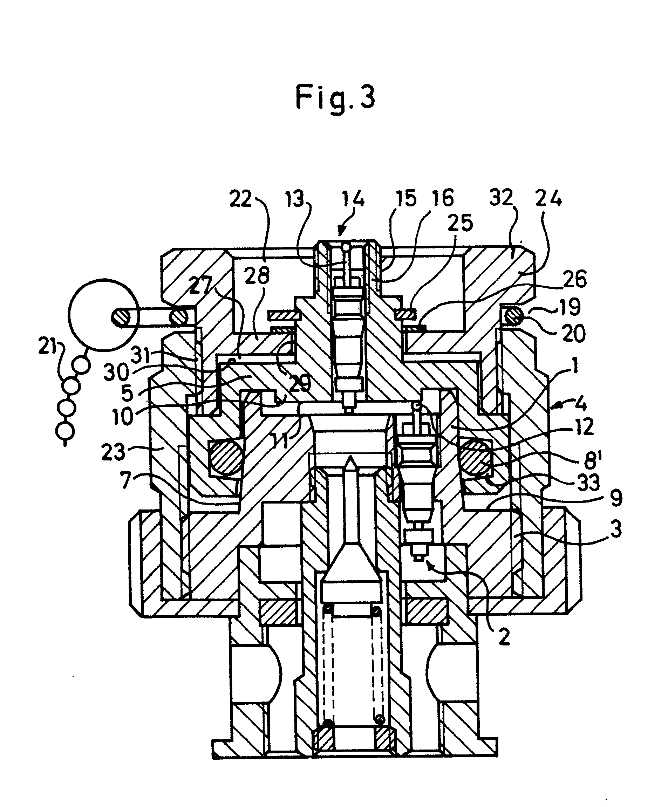

Der Adapteranschluß 4 ist bei dem in den Fig. 2 und 3 dargestellten Ausführungsbeispiel anders ausgebildet. Er besteht dort hauptsächlich aus einem hutförmigen, die Anlagefläche 11, den Reifenfüllanschluß 14 mit dem Zusatzventileinsatz 13 aufweisenden, etwa rotationssymmetrisch ausgebildeten Teil 5, einer ein Doppelgewinde tragenden Büchse 23 und einer Gewindebüchse 24. Die Gewindebüchse 24 ist auf dem zylindrischen Teil 16 des hutförmigen Teils 5 drehbar, aber in axialer Richtung durch einen Sicherungsring 25 und eine Scheibe 26 gesichert gehalten. Die Büchse 24 weist hierzu eine Ausnehmung 22 auf, in der vertieft der Reifenfüllanschluß 14 geschützt angeordnet ist. Der Ausnehmung 22 gegenüberliegend ist eine weitere Ausnehmung 27 angeordnet, in der der mittlere Teil des hutförmigen Teils 5 aufgenommen ist. Die Ausnehmungen 22 und 27 sind durch einen Boden 28 voneinander getrennt und dieser mit einem Durchbruch 29 versehene Boden ist zwischen der Scheibe 26 und einer Schulter 30 des Teils 5 formschlüssig aber drehbar gehalten.

Die Gewindebüchse 24 ist im Gewinde 31 der Büchse 23 schraubbar, wobei durch eine solche axiale Verstellung der hutförmige Teil 5 mit axial verschoben wird. In Fig. 2 ist die abgehobene Ruheposition dargestellt, in der die Ventilstößel 12 freigegeben und damit die Ventileinsätze 1 geschlossen sind. In Fig. 3 ist die Füllposition des Adapteranschlusses 4 dargestellt. Hier sind die Ventilstößel 12 der Ventileinsätze 1 durch die Anlagefläche 11 nach unten gedrückt, so daß die Ventileinsätze 1 geöffnet sind, so daß durch den Reifenfüllanschluß 14 über den Zusatzventileinsatz 13 Luft in das Luftkissen eingeblasen werden kann.

Durch einen umlaufenden Rand 32 der Gewindebüchse 24 und die Büchse 23 wird die Aufnahmerille 19 für den Ring 20 der Haltekette 21 gebildet, so daß auch der in den Fig. 2 und 3 dargestellte Adapteranschluß 4 unverlierbar mit dem Füllventil 2 verkettet sein kann.

Bei der Verstellung des hutförmigen Teils 5 zwischen der Ruheposition und der Füllposition gleitet ein als Dichtring 8 dienender Rundschnurdichtring 8' auf dem Dichtkegel 7, wobei der Rundschnurdichtring 8' in einem Einstich 33 des Teils 5 angeordnet ist.

**Patentansprüche**

1. Druckgasbefülleinrichtung zum Befüllen von Luftkissen, insbesondere zum schonenden Transport von Gütern mit einem mindestens einen, vorzugsweise aber mehrere in einem Ventilgehäuse angeordneten Ventileinsätze (1) aufweisenden Füllventil (2), das einen Gewindeanschluß (3) zum Anschluß einer Druckluftquelle aufweist, bei der ein auf den Gewindeanschluß (3) aufgeschraubter Adapteranschluß (4) mit einem genormten Reifenfüllanschluß (14) mit einem Zusatzventileinsatz (13) vorgesehen ist, mit einer Anlagefläche (11), durch die die Ventilstößel (12) des bzw. der Ventileinsätze (1) bei aufgeschraubtem Adapteranschluß (4) niedergedrückt gehalten und dadurch der Ventileinsatz (1) bzw. die Ventileinsätze (1) offengehalten sind, dadurch gekennzeichnet, daß der Adapteranschluß (4) über ein Gewinde (31) zwischen einer Ruhestellung und einer Füllstellung verstellbar ist, wobei in der Ruhestellung der Ventileinsatz (1) bzw. die Ventileinsätze (1) durch Freigabe des bzw. der Ventilstößel (12) geschlossen und bei der Füllstellung der bzw. die Ventileinsätze (1) durch den bzw. die niedergedrückten Ventilstößel (12) geöffnet sind.

2. Druckgasbefülleinrichtung nach Anspruch 1, dadurch gekennzeichnet, daß der Adapteranschluß (4) eine ein Doppelgewinde tragende Büchse (23) aufweist, deren eines Gewinde auf den Gewindeanschluß (3) aufgeschraubt ist und über deren anderes Gewinde (31) ein hutförmiger, die Anlagefläche (11), den Reifenfüllanschluß (14) mit dem Zusatzventileinsatz (13) aufweisender, etwa rotationssymmetrisch ausgebildeter Teil (5) gegenüber dem Ventilgehäuse (2) axial verstellbar ist.

3. Druckgasbefülleinrichtung nach Anspruch 2, dadurch gekennzeichnet, daß der hutförmige Teil (5) mit einer etwa rotationssymmetrischen Gewindebüchse (24) drehbar gekoppelt ist und diese Gewindebüchse (24) in der das Doppelgewinde tragenden Büchse (23) schraubbar ist.

4. Druckgasbefülleinrichtung nach Anspruch 3, dadurch gekennzeichnet, daß zwischen der Gewindebüchse (24) und der Büchse (23) eine Aufnahmerille (19) für den Ring (20) einer Haltekette (21) vorgesehen ist.

5. Druckgasbefülleinrichtung nach Anspruch 3 oder 4, dadurch gekennzeichnet, daß die Gewindebüchse (24) auf einen zylindrischen Halsteil (16) des hutförmigen Teils (5) drehbar, aber in axialer Richtung gesichert gehalten ist.

6. Druckgasbefülleinrichtung nach einem der Ansprüche 3 bis 5, dadurch gekennzeichnet, daß die Gewindebüchse (24) eine Ausnehmung (22) für die bündige Aufnahme des Reifenfüllanschlusses (14) und auf der gegenüberliegenden Seite durch einen Boden (28) getrennt eine Ausnehmung (27) für den mittleren Teil des hutförmigen Teils (5) aufweist.

7. Druckgasbefülleinrichtung nach Anspruch 5 oder 6, dadurch gekennzeichnet, daß der zylindrische Halsteil (16) in einem Durchbruch (29) des Bodens (28) aufgenommen und durch einen Sicherungsring (25) drehbar gehalten ist.

**Claims**

1. Pressure gas filling device for filling airbags, especially for the protective transport of goods, with a filling valve (2) having at least one, preferably, however, a plurality of valve inserts (1), the filling valve (2) having a thread connector (3) for connection to an air pressure source, wherein a connecting adapter (4) is screwed onto the thread connector (3) and is provided with a standardized tire filling connector (14) and with an additional valve insert (13), and with an abutment surface (11), by which the valve stems (12) of the valve insert (1) or inserts respectively are held in a pressed down position, when the connector adapter (4) is in a screwed-on position, whereby the valve insert (1) or inserts (1) respectively are kept in open position, characterized in that the connecting adapter (4) can be varied in his position between an inoperative position and a filling position by means of a thread (31), whereby in said inoperative position the valve insert (1) or the valve inserts (1) respectively are closed by releasing the valve stem or stems (12) and in said filling position the valve insert (1) or inserts respectively are opened by means of the pressed down valve stem (12) or stems respectively.

2. Pressure gas filling device in accordance to claim 1, characterized in that the connecting adapter (4) comprises a sleeve (23) provided with a double thread, one thread of which is screwed onto the thread connector (3), and over the other thread (31) of which a hat shaped member (5) is displaceably arranged, said member (5) carrying the tire filling connector (14) with the additional valve insert (13) and is formed rotationally symmetrical.

3. Pressure gas filling device in accordance to claim 2, characterized in that the hat shaped member (5) is coupled with an approximately rotationally symmetrical threaded sleeve (24) in rotational direction, and in that this threaded sleeve (24) can be screwed onto the double thread carrying sleeve (23).

4. Pressure gas filling device in accordance to claim 3, characterized in that between the threaded sleeve (24) and the sleeve (23) a take-up groove (19) is provided for the ring (20) of a holding chain (21).

5. Pressure gas filling device in accordance to claim 3 or 4, characterized in that the threaded sleeve (24) is supported on the cylindrical neck member (16) of the hat shaped member (5) in a rotatable manner, but securely held in axial direction.

6. Pressure gas filling device in accordance to one of claims 3 to 5, characterized in that the threaded sleeve (24) is provided with a recess (22) for flushing reception of the tire filling connector (14) and further is provided on the opposite side, and separated by a support plattform (28), with a further recess (27) for receiving the middle portion of the hat shaped member (5).

7. Pressure gas filling device in accordance to claim 5 or 6, characterized in that the cylindrical neck member (16) is received in an opening (29) of the base plattform (28) and is rotatably held by a safety ring (25).

**Revendications**

1. Dispositif de remplissage de gaz sous pression pour remplir des coussins à air, en particulier pour le transport d'articles fragiles, avec une soupape de remplissage (2) présentant une, mais de préférence plusieurs garnitures de soupape (1) disposées dans une cage de soupape, la soupape (2) présentant un raccord fileté (3) pour le raccordement à une source d'air comprimé, un adaptateur (4) vissé sur le raccord fileté (3) étant prévu avec un raccord de remplissage pour pneus (14) normalisé avec une garniture de soupape supplémentaire (13), avec une surface d'assise (11) permettant d'enfoncer les poussoirs de soupape (12) de la ou des garnitures de soupape (1) lorsque l'adaptateur (4) est vissé, la ou les garnitures de soupape (1) étant ainsi maintenues ouvertes, dispositif caractérisé en ce que l'adaptateur (4) peut être ajusté au moyen d'un filetage (31) entre une position de repos et une position de remplissage, la ou les garnitures de soupape (1) étant fermées en position de repos par libération du ou des poussoirs de soupape (12) et ouvertes en position de remplissage par le ou les poussoirs (12) enfoncés.

2. Dispositif selon la revendication 1, caractérisé en ce que l'adaptateur (4) présente une douille (23) portant un filetage double dont l'un est vissé sur le raccord fileté (3) et l'autre filetage (31) permet d'ajuster axialement par rapport à la cage de soupape (2) une pièce (5) en forme de capuchon, à symétrie de rotation, comportant la face d'assise (11) et le raccord pour remplissage de pneu (14) avec la garniture de soupape supplémentaire (13).

3. Dispositif selon la revendication 2, caractérisé en ce que la pièce (5) en forme de capuchon est couplée en rotation avec une douille filetée (24) à symétrie de rotation, et que cette douille filetée (24) peut être vissée dans la douille (23) portant le double filetage.

4. Dispositif selon la revendication 3, caractérisé en ce qu'entre la douille filetée (24) et la douille (23) se trouve une rigole de réception (19) pour l'anneau (20) d'une chaîne de retenue (21).

5. Dispositif selon les revendications 3 ou 4, caractérisé en ce que la douille filetée (24) est montée en rotation sur une pièce de col (16) cylindrique de la pièce (5) en forme de capuchon, mais qu'elle est fixée en direction axiale.

6. Dispositif selon l'une des revendications 3 à 5, caractérisé en ce que la douille filetée (24) présente une cavité (22) pour la réception affleurante du raccord pour remplissage de pneu (14) et sur sa face opposée, une cavité (27), séparée par un fond (28), pour la partie médiane de la pièce (5) en forme de capuchon.

7. Dispositif selon les revendications 5 ou 6, caractérisé en ce que la pièce de col (16) cylindrique est introduite dans une percée (29) du fond (28) et qu'elle est maintenue en rotation par un anneau de fixation (25).

# Fig.1

# Fig. 2

# Fig.3